# EUROPEAN PATENT SPECIFICATION

(11) **EP 3 669 489 B1**
(45) Date of publication and mention of the grant of the patent: **06.03.2024**
(21) Application number: 18846128.9
(22) Date of filing: 08.08.2018
(51) Int. Cl.: G06F 21/64, H04L 9/40, H04L 9/00, G06Q 10/083, H04L 9/32

(54) **USING BLOCKCHAINS WITH SECURE CUSTODY TRANSFER DATA, SEALING DATA, AND OTHER DATA ASSOCIATED WITH MATERIAL TRANSFERS**
VERWENDUNG VON BLOCKCHAINS MIT SICHEREN EICHPFLICHTIGEN VERKEHRSDATEN, DICHTUNGSDATEN UND ANDEREN DATEN IM ZUSAMMENHANG MIT DEM TRANSFER VON MATERIALIEN
UTILISATION DE CHAÎNES DE BLOCS AVEC DES DONNÉES DE TRANSFERT DE GARDE SÉCURISÉES, DES DONNÉES D'ÉTANCHÉITÉ ET D'AUTRES DONNÉES ASSOCIÉES À DES TRANSFERTS DE MATÉRIAU

(30) Priority: 14.08.2017 US 201762544986 P; 04.05.2018 US 201815971775
(43) Date of publication of application: 24.06.2020
(73) Proprietor: Honeywell International Inc., Morris Plains, NJ 07950 (US)
(72) Inventor: DE LIGT, Ruud, Morris Plains New Jersey 07950 (US)
(74) Representative: Houghton, Mark Phillip
(86) International application number: PCT/US2018/045768
(87) International publication number: WO 2019/036251

(56) References cited:
- WO-A1-2017/027648
- US-A1- 2009 187 482
- US-A1- 2012 005 105
- US-A1- 2017 046 709
- US-A1- 2017 083 860
- M Staples ET AL: "RISKS AND OPPORTUNITIES FOR SYSTEMS USING BLOCKCHAIN AND SMART CONTRACTS May 2017 B Risks and opportunities for systems using blockchain and smart contracts CITATION", , 6 June 2017 (2017-06-06), pages 1-60, XP055755596, Retrieved from the Internet: URL:https://www.researchgate.net/publicati on/320619389_Risks_and_opportunities_for_s ystems_using_blockchain_and_smart_contract s [retrieved on 2020-12-01]
- Anonymous: "Distributed Ledger Technology: beyond block chain", UK GOVERNMENT OFFICE FOR SCIENCE, 10 December 2015 (2015-12-10), XP055620806, Retrieved from the Internet: URL:https://assets.publishing.service.gov. uk/government/uploads/system/uploads/attac hment_data/file/492972/gs-16-1-distributed -ledger-technology.pdf [retrieved on 2019-09-11]

## Description

### CROSS-REFERENCE TO RELATED APPLICATION AND PRIORITY CLAIM

This application claims priority under 35 U.S.C. § 119(e) to U.S. Provisional Patent Application No. 62/544,986 filed on August 14, 2017.

### TECHNICAL FIELD

This disclosure generally relates to mechanisms for securing data. More specifically, this disclosure relates to an apparatus and method for using blockchains with secure custody transfer data, sealing data, and other data associated with material transfers.

### BACKGROUND

Various facilities routinely include tanks for storing liquid, solid, or other materials. For example, storage tanks are routinely used in tank farm, facilities and other storage facilities to store oil or other materials. As another example, oil tankers and other transport vessels routinely include numerous tanks storing oil or other materials. Processing facilities also often include tanks for implementing industrial processes.

Often times, it is necessary or desirable to measure the amount of material stored in a tank. This may be useful, for example, during loading of material into the tank or unloading of material from the tank or during liquid stock accounting. As a particular example, "legal metrology" often requires highly accurate measurements from a level sensor installed on the roof of a tank, such as during custody transfers or when levying taxes or duties. In bulk storage tanks, an error of one millimeter in a level reading can correspond to several cubic meters of volumetric error. This can result in losses of thousands of dollars for one or more parties. Moreover, this can have negative effects on stock reconciliation, which involves attempting to track where materials are located and ho materials are lost.

In many jurisdictions, the use of level gauging instalments is monitored or overseen by "weights and measures" or other legal authorities in those jurisdictions. Hardware and software components of a level gauging instrument often need to be tested to verify the accuracy of the level gauging instrument. Assuming the level gauging instrument is accurate, a seal (physical or digital) is applied to the level gauging instrument. The presence of the seal provides some reassurance to parties that the level gauging instrument is providing correct level measurements. Staples et al. (Risks an opportunities for systems using blockchain and smart contracts; XP055755596) describes some of the technical risks and opportunities in the application of blockchain technologies within government and industry. Anonymous (Distributed ledger technology: beyond block chain; XP055620806) relates to the algorithmic technologies that enable bitcoin and their power to transform ledgers as tools to record, enable and secure an enormous range of transactions.

### SUMMARY

The invention relates to a method, an apparatus and a non-transitory computer readable medium for using blockchains for metrology in an industrial control and automation system as set out in the annexed set of claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example blockchain used with secure custody transfer data, sealing data, and other data associated with material transfers in accordance with this disclosure:
FIGURE 2 illustrates an example functional architecture for using blockchains with secure custody transfer data, sealing data, and other data associated with material transfers in accordance with this disclosure;
FIGURE 3 illustrates a specific example use of a functional architecture for using blockchains with secure custody transfer data, sealing data, and other data associated with material transfers in accordance with this disclosure;
FIGURES 4 and 5 illustrate an example of a specific system implementing a functional architecture for using blockchains with secure custody transfer data, sealing data, and other data associated with material transfers in accordance with this disclosure;
FIGURE 6 illustrates an example device supporting blockchains with secure custody transfer data, sealing data, and other data associated with material transfers in accordance with this disclosure;
FIGURE 7 illustrates an example method for using blockchains with secure custody transfer data, sealing data, and other data associated with material transfers in accordance with this disclosure.

### DETAILED DESCRIPTION

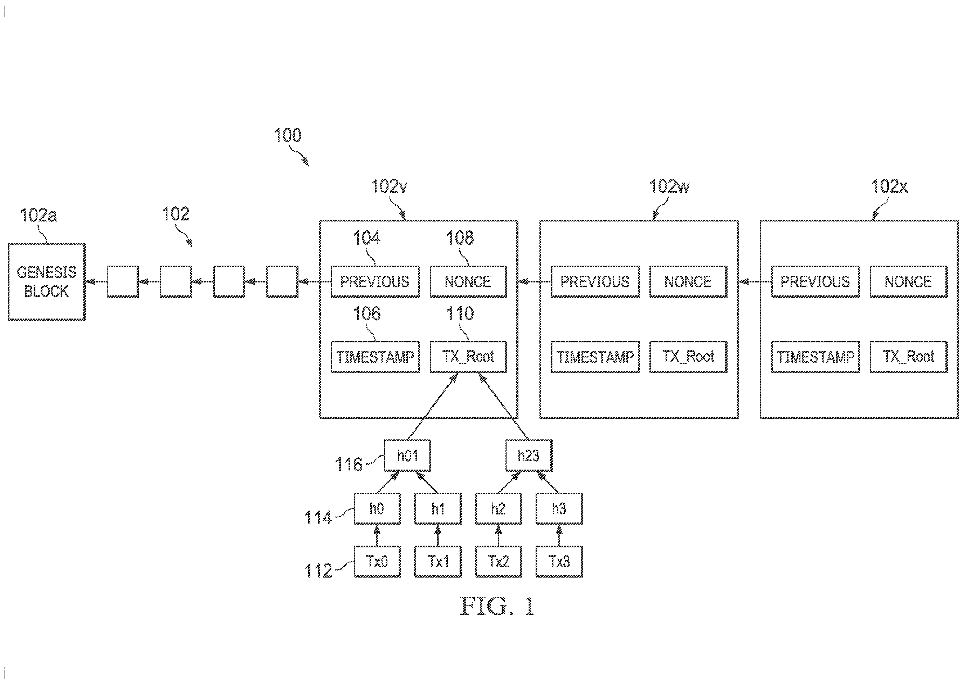

FIGURES 1 through 7, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

As noted above, it is often necessary or desirable to measure the amount of material stored in a tank or being transferred between parties. Also, in many jurisdictions, the use of level gauging instruments is monitored or overseen by "weights and measures" or other legal authorities. Hardware and software components of a level gauging instrument often need to be tested to verify the accuracy of the level gauging instrument. Assuming the level gauging instrument is accurate, a seal (physical or digital) is applied to the level gauging instrument. The presence of the seal provides some reassurance to parties that the level gauging instrument is providing correct level measurements.

Unfortunately, disputes can arise between parties involved in material transfers, whether or not sealed level gauging instruments are used in those material transfers. This can be particularly problematic when there is a chain or sequence of material transfers between numerous parties, which makes it difficult to identify the actual party or parties responsible for transfer errors. Moreover, given the large numbers of level gauging instruments and the use of level gauging instruments in numerous locations, it can be difficult for legal authorities in the appropriate jurisdictions to inspect and maintain approval of the level gauging instruments.

In accordance with this disclosure, various techniques are provided for using one or more blockchains to store "weights and measures" sealing statuses or other data for level gauging instruments and related equipment and/or data for transfers of materials (such as into and out of tanks). Having this data available in one or more blockchains helps to establish and increase trust among various parties involved in material transfers, such as storage facility owners/operators and their customers. It also makes this data available for use by weights and measures authorities or other legal authorities.

Among other things, making this data available in blockchains can reduce the need for weights and measures audits of level gauging instruments and related equipment since the data is available for the authorities remotely. Also, having a full trace (such as a timeline of sealing actions and transactions) for a level gauging instruments and related equipment available in one place can help to simplify traceability in case of disputes between parties. Other or additional benefits can be obtained in various implementations.

FIGURE 1 illustrates an example blockchain 100 used with secure custody transfer data, sealing data, and other data associated with material transfers in accordance with this disclosure. A "blockchain" generally refers to a distributed ledger of transactions, where various parties have access to the distributed ledger. The parties can use the distributed ledger to perform various functions, such as publishing new transactions to the blockchain or using the blockchain to verify ownership of something. New transactions are added as blocks to a blockchain using cryptographic operations, and each block in the blockchain (except the first block) is linked to a previous block in the blockchain. Approval by a majority of parties is generally needed to add transactions to the blockchain or to verify ownership.

As shown in FIGURE 1, the blockchain 100 includes a sequence of blocks 102a-102x (which are referred to generally as blocks 102). Each block 102 functions as a record associated with a specific transaction. As described in more detail below, each transaction represented by a block 102 in the blockchain 100 is associated in some way with a transfer of material. For example, one or more blocks 102 in the blockchain 100 could represent an actual transfer of a specific quantity of a specific material or type of material between parties. As another example, one or more blocks 102 in the blockchain 100 could represent a sealing action involving a level gauging instrument used in one or more transfers of material. In some cases, one or more blocks 102 in the blockchain 100 could represent both an actual transfer of material and the level gauging instrument(s) used in the transfer. Of course, the blocks 102 could be associated with any other transactions related to a transfer of material.

Except for the first block 102a in the blockchain 100, each block 102 includes a previous hash value 104, which represents a cryptographic hash from the previous block 102 in the blockchain 100. Each block 102 also includes a timestamp 106, which identifies the date and time that the associated block 102 was created. Each block 102 further includes a nonce value 108, which represents a value that is added to the block 102 by the party who created the block 102. The nonce value 108 provides proof to other parties that the party who created the block 102 performed certain cryptographic operations in order to generate a valid block 102, where the other parties can easily verify the validity of the block 102 using the nonce value 108.

In addition, each block 102 includes transaction data, which includes a transaction root hash value 110. The transaction root hash value 110 in each block 102 represents a hash value generated by the party who created that block 102 based on transaction information. In this example, the transaction root hash value 110 in each block 102 can be generated by taking data 112 associated with one or more transactions (such as actual data or metadata describing the transactions) and applying one or more hashing functions using the data 112. This generates one or more hash values 114. Assuming there are multiple hash values 114, one or more additional hashing functions (such as pairwise hashing functions) can be applied to the hash values 114 in order to generate one or more additional hash values 116. An additional hashing function could then be applied to the hash values 116 and other contents of the block 102 (such as the previous hash value 104, the timestamp 106, and the nonce value 108) in order to generate the root hash value 110. Note that this represents one example of how the transaction root hash value 110 could be generated. In general, the root hash value 110 could be generated in any suitable manner, as long as the root hash value 110 represents a cryptographic hash of most or all of the block 102. As noted above, the transaction associated with each block 102 relates in some way to a material transfer, such as when the block 102 contains data about the material transferred (like quantity, type, etc.) and/or sealing actions involving one or more instruments or related equipment.

In one aspect of operation, multiple "local" copies of the blockchain 100 are stored and maintained by multiple computing nodes, each of which is accessible by one or more (and typically all) of the parties associated with the blockchain 100. The blockchain 100 therefore functions as a distributed ledger that can be used by multiple parties to obtain or verify information contained in the blocks 102 of the blockchain 100. The parties also generate or use transaction data, and cryptographic operations are performed using the transaction data to create and add new blocks 102 to the blockchain 100. Thus, parties can append new blocks 102 to the blockchain 100 at different computing nodes as new transactions occur, and these blocks 102 are propagated to other computing nodes so that the blockchain 100 can be updated at those nodes. Each new block 102 is linked to a previous block 102 in the blockchain 100 as described above, which helps to prevent someone from illicitly changing data in earlier blocks 102 of the blockchain 100. Approval of a majority of the parties may be required before each new block 102 is added to the blockchain 100.

In the context of material transfers, a blockchain 100 can be used to support various functions. For example, a blockchain 100 could be used to store sealing actions or other actions that involve a level gauging instrument and related equipment used for custody transfers or other material transfers. As noted above, separate seals are often needed for different hardware and software components of a level gauging instrument. One or more seals may also be needed for each hardware and software component of related equipment that is used with a level gauging instrument. Using a blockchain 100 as a storage location for information about the seal status of individual components or chains/groups of components can provide a number of potential advantages. For instance, information about the seal status of equipment can be available to all interested parties at all times. Moreover, the sealing data is secured by the characteristics of the blockchain 100, and the data is accessible to all parties using the blockchain 100. In addition, each local copy of the blockchain 100 can represent a full consistent sequential log of all sealing actions, so there is less sensitivity to data losses related to server crashes or other adverse events. As a particular example, transaction data is often stored on the premises of a storage facility or other facility and needs to be retained for a specified period of time (such as several months) for auditing purposes. Using the ledger of a blockchain 100, this information can be easily stored for very long periods of time, and no maintenance of a local data store for the transaction data is needed.

As another example, a blockchain 100 can be used to identify one or more transfers of material between parties (such as to or from storage tanks), which can help to increase the trust of information. For instance, a blockchain 100 here is not used for monetary transactions related to the one or more transfers of materials. Using a blockchain 100 without having a connection to a cryptographic currency can limit the system from making payments. Instead, the blockchain 100 can be used to keep custody transfer data or other transfer data secure. Typically, a bill of loading or other transfer document is handed to a driver or other personnel as a printed version on paper. The information on the document is needed by the receiver of the materials to make payment. Instead of or in addition to handing over the paper form of a physical document, data can be stored in a blockchain 100. The information stored in the blockchain 100 could include all contents of the document, and the receiver could compare the contents in the blockchain 100 with a paper copy of the document to ensure consistency. The information stored in the blockchain 100 could alternatively include a hash of the contents of the document, and the receiver could compare the hash in the blockchain 100 with a hash value printed on a paper copy of the document to ensure consistency. The contents of the document in the blockchain 100 could be zipped or encoded by the sender, and the contents could only be decrypted or decoded by the proper receiver to maintain data security.

Note that the two examples above are merely meant to illustrate potential ways in which blockchains 100 can be used to support weights and measures functions or other custody/material transfer functions. Blockchains 100 could be used in any other suitable manner to secure important data and share the data between multiple parties. Some additional examples of data that could be secured in the blockchains 100 include calibration data, weights and measures inventory reports, and delta reports.

In this way, the blockchain 100 provides a tamper-evident distributed ledger that can be used by multiple parties. This helps to improve the trust among the parties involved in the blockchain 100 over time. The use of blockchain technology also helps to provide data security and data authenticity. In addition, the use of blockchain technology allows for distributed availability of the data as well as distributed accountability between the parties.

Although FIGURE 1 illustrates one example of a blockchain 100 used with secure custody transfer data, sealing data, and other data associated with material transfers, various changes may be made to FIGURE 1. For example, the blockchain 100 could include any suitable number of blocks 102 and be used to represent any suitable number of transactions. Also, the contents of the blocks 102 could vary as needed or desired. As a particular example, any suitable blockchain technologies could be used here, including those that determine consensus based on non-mining techniques like proof-of-stake techniques. In those types of approaches, content like the nonce values 108 could be omitted from the blocks 102.

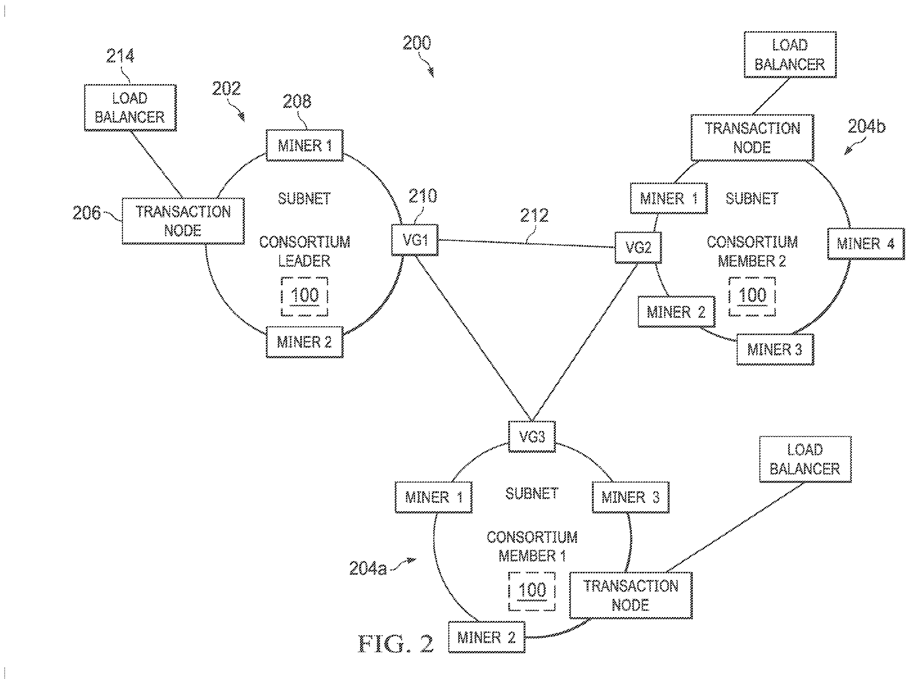

FIGURE 2 illustrates an example functional architecture 200 for using blockchains with secure custody transfer data, sealing data, and other data associated with material transfers in accordance with this disclosure. For ease of explanation, the functional architecture 200 is described as being used by different parties to store information associated with material transfers in copies of the blockchain 100 of FIGURE 1. However, the functional architecture 200 could support the use of any other suitable blockchains.

There are various ways to set up a blockchain, including public, private, and consortium blockchains. Public blockchains are typically available to a large number of users and have been used for cryptographic currencies like BitCoin. When close control is needed, a public blockchain is generally not an option. Private blockchains are typically used by individual companies or other organizations. Consortium (or "permissioned") blockchains can be used when multiple companies or other organizations are involved, such as when hosting blockchain as a service (BAAS), but when public availability of the ledgers is not needed or desired. In FIGURE 2, the functional architecture 200 assumes that one or more blockchains 100 being used by different entities are consortium blockchains. However, this is not necessarily required.

As shown in FIGURE 2, the functional architecture 200 is generally associated with different entities, including a consortium leader 202 and one or more consortium members 204a-204b. The consortium leader 202 generally represents an entity responsible for allowing one or more initial consortium members to join a consortium and begin using one or more blockchains 100. Depending on the implementation, the consortium leader 202 or the initial consortium members can then allow additional consortium members to join the consortium and begin using one or more blockchains 100. Each consortium member 204a-204b generally represents an entity that uses one or more blockchains 100 in some way. It should be noted that these designations (consortium leader and consortium member) are used here as a matter of convenience and do not limit the activities that can be performed by these entities. For instance, a consortium leader often represents an entity that uses the blockchains 100 and thus acts like a consortium member. Also, an entity could act as a consortium leader for some blockchains 100 and as a consortium member for other blockchains 100.

Each entity associated with the functional architecture 200 generally operates or has access to its own subnetwork that supports the use of the blockchains 100. Each subnetwork could be formed from a single computing node or multiple computing nodes. Each subnetwork could represent one or more computing nodes owned or operated by the associated entity, or each subnetwork could be implemented virtually (such as in a cloud computing environment) on behalf of the associated entity. The computing nodes here include transaction nodes 206, mining nodes 208, and virtual gateways 210.

Each transaction node 206 generally operates to receive information associated with transactions (such as material transfers or sealing actions) and submit that information to one or more mining nodes 208 for inclusion in one or more suitable blockchains 100. Each mining node 208 generally operates to perform cryptographic operations using the transaction information in order to create new blocks 102 that are added to their local copies of the suitable blockchains 100. Each virtual gateway 210 generally operates to support communications between the various entities over a virtual network 212. Among other things, this allows each mining node 208 to send updates made to its local copy of one or more blockchains 100 to other mining nodes 208, which allows those other mining nodes 208 to update their local copies of the same blockchain(s) 100. Different virtual networks 212 (accessible via a common virtual gateway 210 or different virtual gateways 210) could be used by each entity to support the use of different consortium blockchains.

Each entity can have or use any suitable numbers of transaction nodes 206, mining nodes 208, and virtual gateways 210. In some embodiments, each of the transaction nodes 206, mining nodes 208, and virtual gateways 210 could represent a virtual node or virtual machine that is executed in a computing cloud or on other suitable hardware. In particular embodiments, the transaction nodes 206, mining nodes 208, and virtual gateways 210 could be executed using one or more of MICROSOFT's AZURE, IBM's BLUE MIX, and AMAZON's AWS computing cloud services. This approach allows transaction nodes 206, mining nodes 208, and virtual gateways 210 to be executed and used when needed. However, other approaches could also be used here.

If needed or desired, one or more load balancers 214 could be used to distribute processing loads among the different entities involved in the consortium. This may help to reduce or prevent one entity's actual or virtual computing nodes from being over-burdened while another entity's computing nodes are under-utilized. For example, since different entities may have different numbers of mining nodes 208, entities with more mining nodes 208 may be able to receive and process more requests to add blocks 102 to blockchains 100. In some embodiments, the load balancers 214 may be responsible for passing requests to the transaction nodes 206, so the load balancers 214 could include public Internet Protocol (IP) addresses. The transaction nodes 206 could be accessed using Secure Shell (SSH) or other cryptographic network protocols. This could help to shield the mining nodes 208 so that the mining nodes 208 cannot be accessed remotely.

As described in more detail below, this type of functional architecture 200 can be used by various parties associated with material transfers. For example, in the oil and gas industry, an oil and gas supply chain can involve numerous parties between the points where oil and gas are extracted from the ground and the points where products are delivered to customers. These parties can include refineries, suppliers, bottling plants, bulk storage terminal operators, metering system suppliers, weights and measures authorities, port authorities, bulk distribution terminal operators, pipeline operators, truck/train/ship operators, gas stations, and customers. Different parties can use the functional architecture 200 to create and use blockchains 100 associated with material transfers, level gauging instruments and related equipment used in material transfers, or other information about material transfers. Among other things, the blockchains 100 can be used to provide digitized audit trails for weights and measures authorities, support transparent transactions between parties, and enhanced trust between parties.

Any suitable blockchain technologies and nodes associated with those blockchain technologies can be used in the functional architecture 200. In some embodiments, for example, the ETHEREUM blockchain as a service can be used, although other implementations are also possible. For instance, there are a number of blockchain technologies associated with cryptocurrencies that could be used (modified or unmodified) in the functional architecture 200.

Although FIGURE 2 illustrates one example of a functional architecture 200 for using blockchains with secure custody transfer data, sealing data, and other data associated with material transfers, various changes may be made to FIGURE 2. For example, a consortium blockchain could be used by any number of consortium members, and each consortium leader/member could support any number of transaction nodes, mining nodes, and virtual gateways. Also, FIGURE 2 illustrates one example operational environment in which blockchains can be used with secure custody transfer data or other data, and this functionality can be used in any other suitable system.

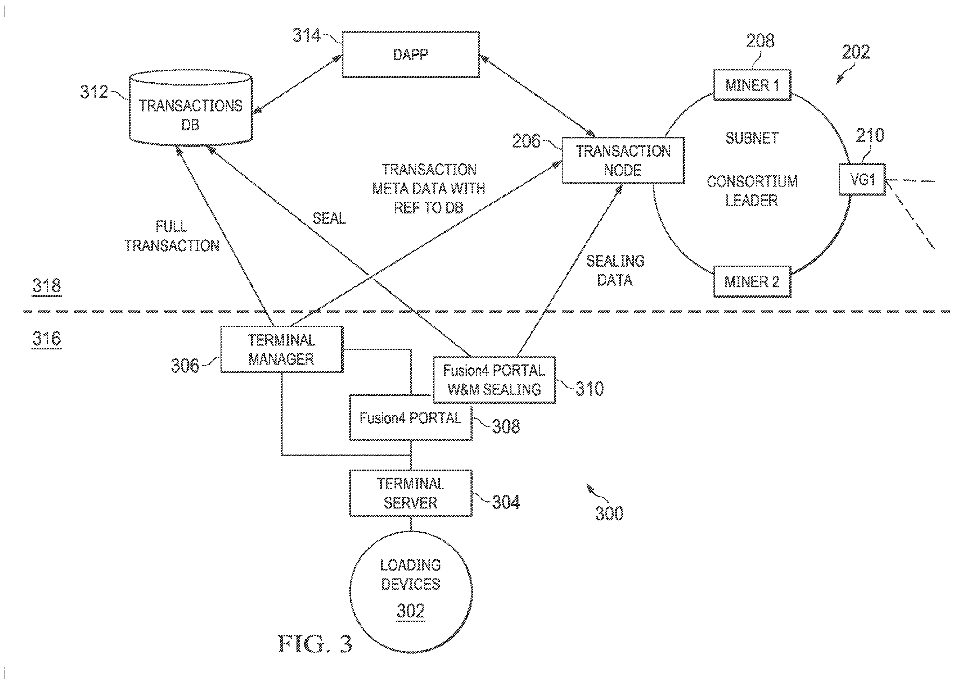

FIGURE 3 illustrates a specific example use of the functional architecture 200 for using blockchains with secure custody transfer data, sealing data, and other data associated with material transfers in accordance with this disclosure. As shown in FIGURE 3, the functional architecture 200 can be integrated or used with an oil and gas terminal system 300. The terminal system 300 generally includes various components used to manage the operation of an oil and gas terminal, which can often be a large and complex facility.

The terminal system 300 in this example includes various loading devices 302, which represent components used to load material onto trucks, trains, ships, or other cargo vehicles. The loading devices 302 could include or be used with level gauging instruments or other related equipment. The terminal system 300 could include any number(s) and type(s) of loading devices 302 depending on the material(s) being transferred. A terminal server 304 represents at least one computing device used, among other things, to control the loading devices 302 and collect data about transferred materials. A terminal manager 306 represents at least one computing device used, among other things, to control the terminal server 304 and provide information to terminal personnel. As a particular example, the terminal manager 306 could be used to record information about material transfers occurring in the terminal system 300. A portal 308 represents at least one computing device executing an application to generate bills of lading or other documents for materials being transferred, such as the FUSION4 portal application from HONEYWELL INTERNATIONAL INC. The portal 308 can also be used to store sealing information 310 about the loading devices 302, level gauging instruments, or other equipment.

In this example, information about each material transfer in the terminal system 300 can be provided from the terminal manager 306 to a database 312 for storage. Also, information about sealing actions for loading devices 302, level gauging instruments, or other equipment can be provided from the portal 308 to the database 312 for storage. Data describing this information, such as metadata about the material transfers and seals, can be provided from the terminal manager 306 and the portal 308 to the transaction node 206 of at least one of the entities participating in a consortium blockchain. In FIGURE 3, that entity is the consortium leader 202, although it could be one or more of the consortium members 204a-204b. While use of a load balancer 214 is not shown in FIGURE 3, the data could be provided to one or more transaction nodes 206 through at least one load balancer 214.

Each transaction node 206 provides the received information to one or more mining nodes 208. The mining nodes 208 process the data to generate new blocks 102 for insertion into local copies of the appropriate blockchains 100. These mining nodes 208 also communicate blockchain updates to other mining nodes 208 so that die other mining nodes 208 can update their local copies of the appropriate blockchains 100. In this example, metadata about material transfers and sealing actions are provided to the mining nodes 208 and used to generate the blocks 102, rather than complete descriptions of the material transfers and sealing actions. Of course, other data (including the complete descriptions) could be included in and used to generate the blocks 102. Each transaction node 206 could access the database 312 to verify received data or to obtain full information about the material transfers and sealing actions. Here, the transaction node 206 interacts with the database 312 via at least one client application 314, such as a distributed application (DAPP). However, any other suitable mechanism could be used to allow one or more transaction nodes 206 to interact with one or more databases 312.

In some embodiments, different components shown in FIGURE 3 could reside in different computing domains. For example, the components 302-310 could reside in a fog computing domain 316, and the components 208-210 and 312-314 could reside in a cloud computing domain 318. However, other arrangements of components could be used in FIGURE 3, and the components in FIGURE 3 could reside in any suitable domain(s).

Although FIGURE 3 illustrates one specific example use of the functional architecture 200 for using blockchains with secure custody transfer data, sealing data, and other data associated with material transfers, various changes may be made to FIGURE 3. For example, the terminal system 300 could provide only material transfer data or only sealing data for inclusion in one or more blockchains. Also, the functional architecture 200 could be used in a variety of other ways and does not need to be used with the terminal system 300 shown here. In addition, FIGURE 3 illustrates one example operational environment in which blockchains can be used with secure custody transfer data or other data, and this functionality can be used in any other suitable system.

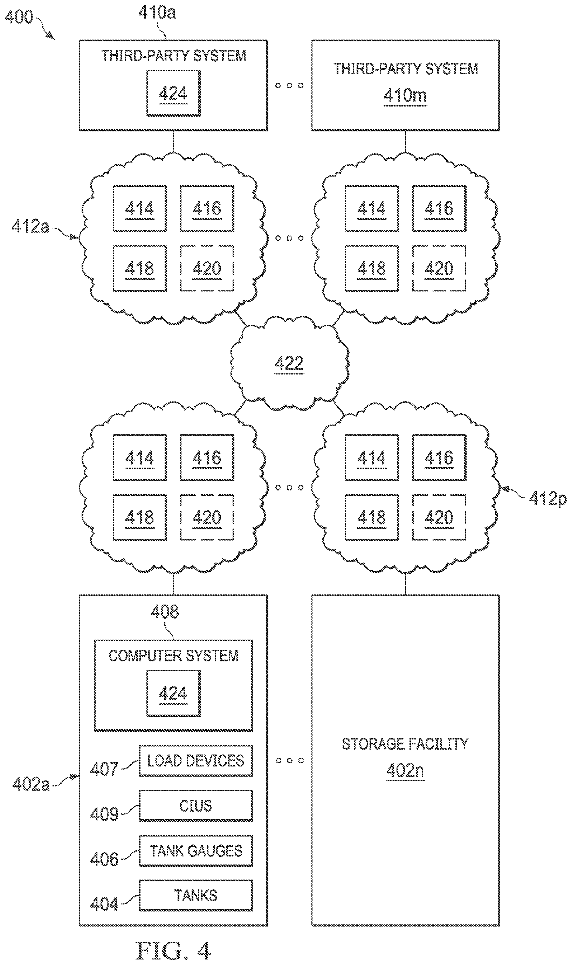

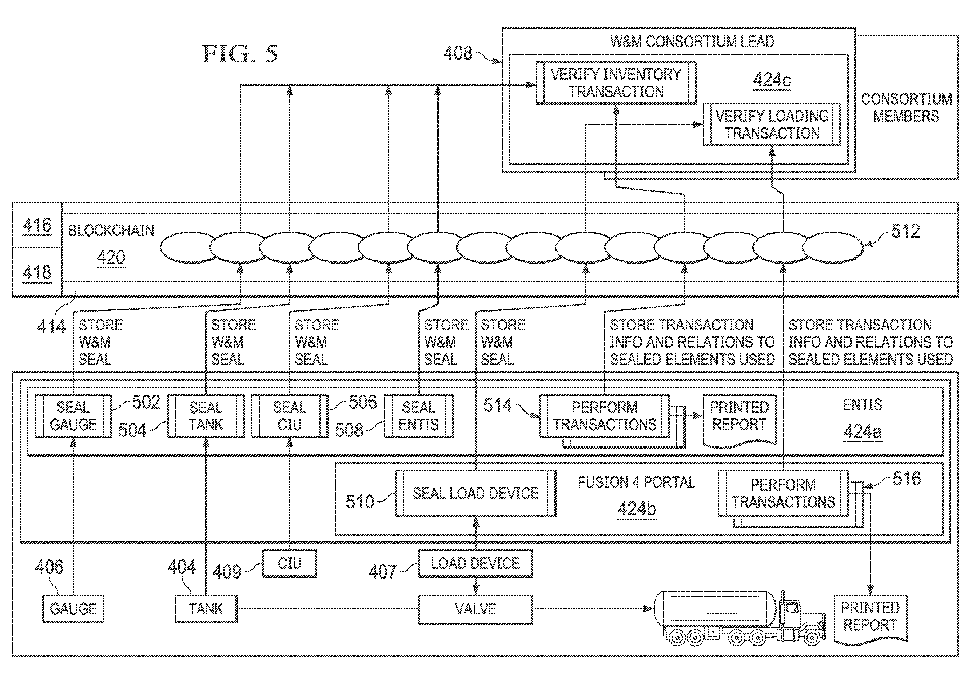

FIGURES 4 and 5 illustrate an example of a specific system implementing a functional architecture for using blockchains with secure custody transfer data, sealing data, and other data associated with material transfers in accordance with this disclosure. In particular, FIGURE. 4 illustrates an example system 400 that could implement the functional architecture 200, and FIGURE 5 illustrates an example use of a blockchain in the system 400.

As shown in FIGURE 4, the system 400 includes multiple storage facilities 402a-402n. Each storage facility 402a-402n generally represents any suitable facility used to receive, store, and distribute one or more products or other materials, such as petroleum products. Each storage facility 402a-402n could receive cargo from or provides cargo to a number of cargo vehicles, such as trucks, trains, or ships, for delivery to or from a number of destinations. Each storage facility 402a-402n represents any suitable facility or portion thereof that stores material and facilitates transfer of the material.

In the example shown in FIGURE 4, each of the storage facilities 402a-402n includes a number of tanks 404, which denote structures used to store materials. Each tank 404 could have any suitable size, shape, and dimensions and could be used to store any suitable materials. Various tank gauges 406 (level gauging instruments) are used in conjunction with the tanks 404. The tank gauges 406 are used to capture data associated with the materials stored in the tanks 404. For example, the tank gauges 406 could be used to capture level measurements identifying the height of materials in the tanks 404. Any suitable tank gauges 406 could be used here, such as servo gauges or radar gauges.

One or more loading devices 407 can be used to control the loading or unloading of materials into and out of the tanks 404. For example, a loading device 407 could control the loading of material from a cargo vehicle into a tank 404 or control the loading of material from a tank 404 into a cargo vehicle. The loading devices 407 could control the loading or unloading of materials into and out of the tanks 404 in any suitable manner, such as by controlling one or more pumps, valves, or other structures. Each loading device 407 includes any suitable structure for controlling loading/unloading of material, such as a computing system.

Each of the storage facilities 402a-402n may also include one or more computer systems 408, which can be used to perform various functions. For example, the computer systems 408 could be used to schedule cargo loading and unloading within the storage facilities 402a-402n. The computer systems 408 could also be used to control the loading devices 407 so that specified amounts of materials are loaded to or from cargo vehicles. The computer systems 408 could further provide data to control rooms or other destinations for use by human operators. As a specific example, the computer systems 408 could represent or support one or more terminal managers 306 and one or more portals 308. As described in more detail below, the computer systems 408 could also be used to collect data associated with the tanks 404, tank gauges 406, loading devices 407, or other components and to publish this data as transactions to one or more blockchains. Note that while the computer systems 408 may be described as supporting the use of blockchains, the tank gauges 406, loading devices 407, or other components themselves could incorporate processing and communication components to support the use of blockchains. Each computer system 408 includes any suitable data processing device that supports the use of blockchains, such as desktop, laptop, server, or tablet computers, tank gauges, or other devices.

One or more communication interface units (CIUs) 409 could optionally be positioned between the tank gauges 406 and the loading devices 407/ computer systems 408. Each of the communication interface units 409 is typically configured with information about one or more tanks 404 and can receive data from one or more tank gauges 406. The communication interface unit 409 can also perform a number of calculations using the data from the one or more tank gauges 406, such as volume and mass calculations. The communication interface unit 409 can then output the results of these calculations for use by the loading devices 407, computer systems 408, or other components. Each communication interface unit 409 includes any suitable structure for receiving data from at least one tank gauge and performing calculations. Note, however, that the functionality of the communication interface units 409 could be incorporated into other devices, such as the tank gauges 406, loading devices 407, or computer systems 408.

Various third-party systems 410a-410m are also used in the system 400 and support the use of block chains. The third-party systems 410a-410m could denote data processing systems used by parties associated with cargo or the storage facilities 402a-402n. Example third-party systems 410a-410m could include computing systems used by product producers, cargo carriers, product distributors, and end customers. Example third-party systems 410a-410m could also include computing systems used by local legal authorities, such as "weights and measures" authorities, who are responsible for monitoring or overseeing tank inventory and loading systems. Example third-party systems 410a-410m could further include a computing system that is used by a party hosting or overseeing the use of one or more blockchains, such as a consortium leader 202. As a specific example, a company that manufactures or provides the tank gauges 406 (and that is otherwise unrelated to the storage facilities and other third parties) could host or oversee the use of one or more blockchains.

Assume that at least one consortium blockchain is used in FIGURE 4. A consortium blockchain can be established by one of the parties in FIGURE 4, and other parties in FIGURE 4 can be allowed to join the consortium blockchain. Each party can own, use, or otherwise have access to a computing cloud 412a-412p, which generally represents one or more computing devices executing functions on behalf of the associated party. Often times, the computing clouds 412a-412p represent computing clouds leased, rented, or otherwise used (but not owned) by the parties in FIGURE 4 (although this need not be the case). Various companies offer computing cloud services, such as MICROSOFT's AZURE, IBM's BLUE MIX, and AMAZON's AWS. Depending on the implementation, at least some of the computing clouds 412a-412p shown in FIGURE 4 could denote different portions of the same computing cloud. It is also possible that at least some of the computing clouds 412a-412p shown in FIGURE 4 could denote different portions of different computing clouds.

Within each computing cloud 412a-412p, the associated party has one or more transaction nodes 414, one or more mining nodes 416, and optionally one or more load balancing nodes 418. While not shown here, the associated party could also have one or more virtual gateways within each computing cloud 412a-412p. These components may be the same as or similar to the corresponding components described above with respect to FIGURE 2. These components support the use of one or more blockchains 420 by the consortium members. The transaction nodes 414 generally operate to receive transaction data (such as actual material transfer and seal transaction data or metadata) and to provide the transaction data to the mining nodes 416. The mining nodes 416 generally operate to create new blocks for the transactions and to publish the new blocks for addition to the blockchains 420. The mining nodes 416 could be responsible for obtaining consensus for adding blocks to the blockchains 420, verifying ownership using the blockchains 420, or performing any other suitable functions. Establishing consensus could occur in any suitable manner. The load balancing nodes 418 generate operate to distribute transactions to the transaction nodes 414 and/or the mining nodes 416 if a large number of transactions are envisioned. If not, the load balancing nodes 418 can be omitted. Each of the nodes 414-418 could be implemented in any suitable manner. For instance, each of the nodes 414-418 could represent a virtual node or virtual machine executed in a computing cloud. The blockchains 420 could be implemented as described above with respect to FIGURE 1, or other blockchain forms could be used.

If needed, at least one network 422 can be used to couple the computing clouds 412a-412p. The network 422 facilitates communications between various components in the system 400. For example, the network 422 may communicate Internet Protocol ("IP") packets or other information between network addresses. The network 422 could support communications over any suitable physical or wireless connections. The network 422 may include one or more local area networks ("LANs"), metropolitan area networks ("MANs"), wide area networks ("WANs"), all or a portion of a global network such as the Internet, or any other communication system or systems at one or more locations.

In some embodiments, the leader of a consortium blockchain can connect member subnetworks (the computing clouds 412a-412p in this example) by configuring virtual network settings to connect the members over the network 422. The leader and the other members can then host the transaction nodes 414, which could receive new blockchain content, such as from distributed applications. The transaction nodes 414 can provide the new blockchain content to the mining nodes 416 for insertion into the blockchains 420. In particular embodiments, all transaction nodes 414 could be accessible over a specified port or ports using a secure protocol such as SSH, and the mining nodes 416 could be shielded so they cannot be accessed remotely.

During the exchange of materials between two parties (such as a storage facility operator and a party loading or unloading cargo), a bill of loading and/or transport documents are typically exchanged. These documents often show the exact amount of materials being transferred (loaded or unloaded). Unlike an invoice, these documents typically do not show unit prices. Instead, the parties typically have an agreement in place about the price of the materials.

To protect the parties involved, many countries around the world require various transactions to comply with rules of custody transfer. To produce a document that is marked as a legally-relevant custody transfer, the hardware and software used to measure, store, and print data need to meet certain standards. In order to establish the correctness of figures produced on paper or in digital files, the entire chain of components in use often needs to be verified and approved by local legal authorities. In FIGURE 4, for example, the chain of components could include a tank gauge 406, a loading device 407, a CIU 409, and a computer system 408. The verification process routinely includes validating the software and/or hardware that is used to produce the figures. This verification can be performed either by an official of the local legal authority or by accredited personnel. After having validated the correct brand, type, model, version number, and configuration settings of the equipment, the official or accredited personnel can apply one or more seals to the equipment. Each seal can be a physical (hardware) seal or a digital (software) seal.

A document typically cannot show "weights and measures" approved data unless die entire chain (all hardware and software needed to produce the document) is sealed. The owner of the hardware and software is responsible for keeping the seals intact. Whenever a seal is broken in the chain, this information is propagated to a relevant document or file. A broken seal can only be re-applied by the local legal authorities or accredited personnel, and producing documents or files showing legally-relevant data while one or more parts have a broken seal is a legal offense. The owner of the hardware and software is also responsible for producing correct information. Whenever an error causes a measurement to be inaccurate, this is also propagated to a relevant document or file.

Hardware seals are often uniquely coded, and information about hardware being sealed is usually not available in an application log file or other data file of a storage facility. The physical existence of the hardware seals is often the only proof that the hardware seals exist. Information about the times and dates of applying software seals can be logged within an application log file other data file of a storage facility. However, this information is typically not shared with parties outside of the storage facility. Since both officials and accredited personnel (such as service engineers of hardware manufacturers) are allowed to break and re-apply seals, to allowing auditing of the proper sealing by officials, it would help to have a sequential log of all sealing actions available. Unfortunately, such records do not exist. Even when an official keeps a record of his or her sealing actions, actions by accredited personnel would be missed.

The following describes various ways in which a consortium blockchain can be used with consortium members like storage facilities/industrial plants/distribution terminals, customers, and legal authorities is a unique way to share and secure data and gain trust. The data that is secured can include various data about the tanks 404, tank gauges 406, loading devices 407, computer systems 408, CIUs 409, or other equipment, such as sealing of the various components and transfers of materials to or from the tanks 404. Note, however, that any other suitable data could be securely stored and used.

As an example, blockchains 420 can be used to improve the storage of information about seals of the tank gauges 406, loading devices 407, computer systems 408, and CIUs 409. There could be a seal for each component in its entirety or seals for individual components or modules of these components. Using blockchain technology may increase trust between the site owning a sealed instrument and local legal authorities. To achieve this, the computer system 408 of a storage facility, a third-party system 410 (such as one used by legal authorities), or other component can collect information about hardware seals of that storage facility's tank gauges 406, loading devices 407, computer systems 408, and CIUs 409. The information about the hardware seals can be entered manually or using an automated process, such as based on images of the hardware seals. The tank gauges 406, loading devices 407, and CIUs 409 themselves could also provide this information. The computer system 408 or the third-party system 410 can also collect information about software seals, which could be fetched and added automatically.

Using this information, historical data can be built about the hardware and software seals applied to tank gauges 406, loading devices 407, computer systems 408, and CIUs 409, and each seal can be associated with a block in a blockchain 420 for that component or for the entire chain of components. Whenever a new seal is applied, the computer system 408, third-party system 410, or other component can collect data for that new seal and publish it as a new transaction in the blockchain 420. If the local legal authorities are a member of the blockchain consortium, this informs the local legal authorities of the new seal.

The above functionality could be implemented in a number of ways. For example, each of the components in a chain could have processing and communication functionality allowing the components to publish information to appropriate blockchains. In other embodiments, the computer systems 408 and third-party systems 410a-410m could include "edge" modules 424 that perform communications with cloud services supporting the blockchains 420. The modules 424 could denote software components that can be added to the systems 408, 410a-410m. The modules 424 can fetch all required or desired sealing information and publish this information into the blockchain(s) 420. The modules 424 can also provide user interfaces allowing accredited personnel, legal authorities, or other authorized users to enter data that is published manually. If a module 424 fetches information identifying a broken seal, the module 424 can publish this information into the blockchain 420 immediately, and legal authorities or a site owner can be notified so that corrective action can be taken.

FIGURE 5 represents an example of this functionality. As shown in FIGURE 5, an edge module 424a associated with a terminal represents an ENTIS inventory system from HONEYWELL INTERNATIONAL INC., and an edge module 424b associated with the terminal represents a FUSION4 portal application. This specific system and this specific application are examples only, and other inventory systems and portal applications could be used.

The edge modules 424a-424b collect various information about seals associated with the terminal. This information includes gauge seal information 502 associated with one or more tank gauges 406 and tank seal information 504 associated with one or more tanks 404. This information also includes CIU seal information 506 associated with one or more communication interface units 409 and edge module seal information 508 associated with the edge module 424a itself. This information further includes loading device seal information 510 associated with one or more loading devices 407. Each instance of the seal information 502-510 could contain information related to sealing of the associated equipment, such as information about when the seals were applied or events that broke the seals. Each instance of the seal information 502-510 or metadata about that seal information 502-510 could be provided to one or more mining nodes 416 for inclusion in one or more blocks 512 of the blockchain 420.

The edge modules 424a-424b in this example also initiate actions associated with various transactions 514 and 516, respectively. The transactions 514 and 516 involve the transfer of material using one or more sealed elements. Details of each transaction 514 and 516, such as actual transaction data or metadata, could be provided to one or more mining nodes 416 for inclusion in one or more blocks 512 of the blockchain 420. The information about each transaction 514 and 516 could include an identification of any sealed elements involved. A printed report (such as a bill of lading or transfer document) could optionally be generated and provided for each transaction 514 and 516, as well.

The blockchain 420 in this example is accessed and used by the computer system 408 of a weights and measures legal authority, which here is functioning as the consortium leader (although this need not be the case). The legal authority can use the blockchain 420 to, among other things, verify inventory and loading transactions and investigate any disputes. For instance, the legal authority could use the blockchain 420 to verify whether certain inventory and loading transactions were performed using appropriately sealed equipment. Other consortium members here could use the blockchain 420 for other purposes, such as to verify transferred material quantities for payment.

Although FIGURES 4 and 5 illustrate one example of a specific system 400 implementing a functional architecture for using blockchains with secure custody transfer data, sealing data, and other data associated with material transfers, various changes may be made to FIGURES 4 and 5. For example, the system 400 could include any number of storage facilities, third-party systems, nodes, blockchains, and other components. Also, the makeup and arrangement of the system 400 in FIGURE 4 is for illustration only. Components could be added, omitted, combined, or placed in any other suitable configuration according to particular needs. Further, FIGURE 4 illustrates one example operational environment in which blockchains can be used with secure custody transfer data or other data, and this functionality can be used in any other suitable system. In addition, FIGURE 5 represents specific examples of the types of transaction data that could be included in a blockchain and the specific components that provide or use that data. Any other or additional components could provide data for inclusion in a blockchain, and the blockchain could be used in any other suitable manner.

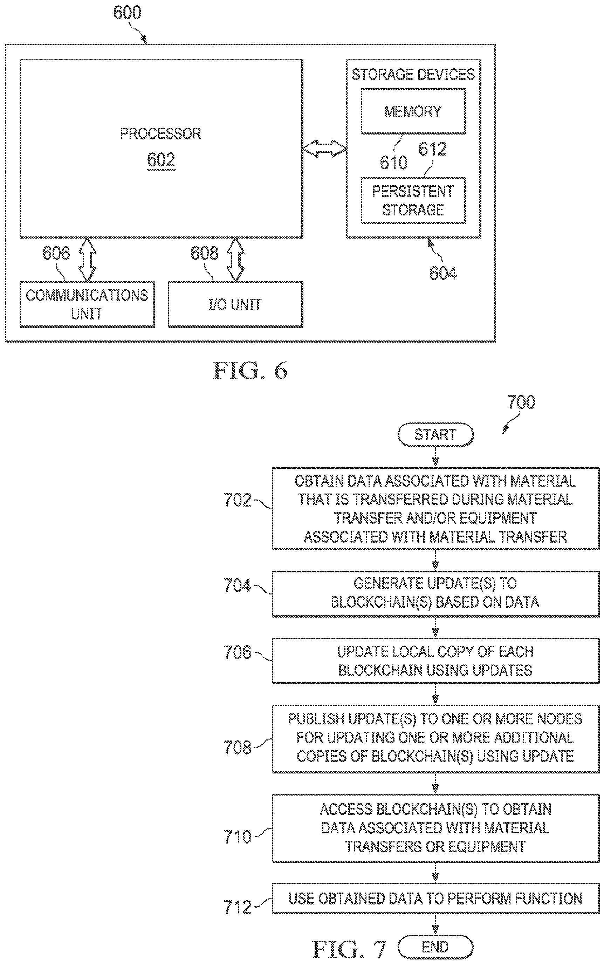

FIGURE 6 illustrates an example device 600 supporting blockchains with secure custody transfer data, sealing data, and other data associated with material transfers in accordance with this disclosure. The device 600 could, for example, represent computing devices implementing one or more transaction nodes 206, one or more mining nodes 208, and/or one or more virtual gateways 210 shown in FIGURE 2 and described above that might use blockchains. The device 600 could also represent any of the computer systems 408, third-party systems 410a-410m, devices in computing clouds 412a-412p, or other components shown in FIGURE 4 and described above that might use blockchains.

As shown in FIGURES 6, the device 600 includes at least one processor 602, at least one storage device 604, at least one communications unit 606, and at least one input/output ("I/O") unit 608. Each processor 602 can execute instructions, such as those that may be loaded into a memory 610. For example, the instructions can implement various functions described in this document for using blockchain technology. Each processor 602 denotes any suitable processing device, such as one or more microprocessors, microcontrollers, digital signal processors, application specific integrated circuits ("ASICs"), field programmable gate arrays ("FPGAs"), or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random access memory or any other suitable volatile or non-volatile storage device(s). The persistent storage 612 may contain one or more components or devices supporting longer-term storage of data, such as a read only memory, hard drive, Flash memory, or optical disc.

The communications unit 606 supports communications with other systems or devices. For example, the communications unit 606 could include at least one network interface card or wireless transceiver facilitating communications over at least one wired or wireless network. The communications unit 606 may support communications through any suitable physical or wireless communication link(s).

The I/O unit 608 allows for input and output of data. For example, the I/O unit 608 may provide a connection for user input through a keyboard, mouse, keypad, touchscreen, or other suitable input device. The I/O unit 608 may also send output to a display, printer, or other suitable output device.

Although FIGURE 6 illustrates one example of a device 600 supporting communication using blockchain technology, various changes may be made to FIGURE 6. For example, components could be added, omitted, combined, further subdivided, or placed in any other suitable configuration according to particular needs. Also, computing devices can come in a wide variety of configurations, and FIGURE 6 does not limit this disclosure to any particular configuration of computing device.

FIGURE 7 illustrates an example method 700 for using blockchains with secure custody transfer data, sealing data, and other data associated with material transfers in accordance with this disclosure. For ease of explanation, the method 700 is described as involving the use of one or more devices 600 from FIGURE 6 in the functional architecture 200 of FIGURE 2. However, the method 700 could be used with any other suitable devices and in any other suitable systems.

As shown in FIGURE 7, data associated with (i) material that is transferred during a material transfer involving multiple parties and/or (ii) equipment associated with the material transfer is obtained at step 702. This includes a processor 602 executing or implementing a transaction node 206 to receive transaction-related data (such as complete descriptions or metadata) from at least one data source. This also includes passing the data to a processor 602 executing or implementing at least one mining node 208. Note that the same processor 602 executes both nodes. The data source(s) could represent any suitable source(s) of information, such as a terminal manager 306, portal 308, computer system 408, or edge module 424. The data relates to an actual transfer of material between parties and/or a sealing action involving equipment used in material transfers. The data could also relate to calibration data for equipment used in material transfers, weights and measures inventory reports, delta reports, and/or any other or additional information.

At least one update to at least one blockchain is generated based on the data at step 704, and a local copy of the blockchain(s) is updated using the at least one update at step 706. This includes the processor 602 executing or implementing die mining node 208 to generate one or more blocks 102 to be added to one or more blockchains 100. This could also include the processor 602 executing or implementing the mining node 208 to insert each new block 102 into the appropriate blockchain 100. Each block 102 could have the form shown in FIGURE 1 and could contain a link back to a previous block 102 (such as the previous block's root hash value 110) to help secure the block chain 100. In some embodiments, the mining node 208 could interact with other mining nodes 208 in order to determine whether the addition of a new block 102 to a blockchain 100 is allowed. The at least one update is also published to one or more other nodes for updating one or more additional copies of the blockchain(s) at step 708. This could include, for example, the processor 602 executing or implementing the mining node 208 to transmit each new block 102 to one or more other mining nodes 208. This could also include the processor 602 executing or implementing each of the other mining nodes 208 to insert each new block 102 into the appropriate blockchain 100.

The steps 702-708 could be repeated any number of times by any number of nodes to support the use of at least one blockchain 100 containing material-transfer related data. Each blockchain 100 could include only several blocks 102 or a large number of blocks 102. Each blockchain 100 could also be used in any suitable manner. For example, one or more blockchains could be accessed in order to obtain data associated with one or more material transfers or equipment at step 710, and the data could be used to perform at least one function at step 712. This could include, for example, a computer system 408 accessing at least one blockchain 100 to obtain information about prior material transfers and sealing actions for weights and measures purposes or other legal purposes. This could also include a computer system 408 accessing at least one blockchain 100 to obtain quantity information and other information for payment purposes. Any other or additional actions could occur using one or more blockchains containing information about material transfers or associated equipment.

Although FIGURE 7 illustrates one example of a method 700 for using blockchains with secure custody transfer data, sealing data, and other data associated with material transfers, various changes may be made to FIGURE 7. For example, while shown as a series of steps, various steps in FIGURE 7 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C. and A and B and C.

While this disclosure has described certain embodiments and generally associated methods, alterations and permutations of these embodiments and methods will be apparent to those skilled in the art. Other changes, substitutions, and alterations are also possible as defined by the following claims.

## Claims

1. A method for using blockchains for metrology in an industrial control and automation system, comprising:
obtaining (702) by a processor, measurement_data obtained from a level gauging instrument_associated with at least one of: (i) material that is transferred during a material transfer involving multiple parties and (ii) the level gauging instrument_associated with the material transfer, wherein the processor is configured to:
execute a transaction node to receive the measurement data;
submit the measurement data to one or more mining nodes for inclusion in one or more suitable blockchains;generating (704), an update to a blockchain (100, 420) based on the measurement data,including identifying one or more sealing actions associated with one or more seals that are issued when the level gauging instrument is verified to provide the measurement data with acceptable accuracy applied to the level gauging instrument or to components of the level gauging instrument, including information about when the seals were applied or information about events that broke the seals, wherein the processor executes the mining node to generate one or more blocks to be added to one or more blockchains;
updating (706) a local copy of the blockchain using the update; and
publishing (708) the update to one or more nodes for updating one or more additional copies of the blockchain.

2. The method of Claim 1, wherein publishing the update comprises publishing the update to multiple parties of a consortium, including a legal authority.

3. The method of Claim 1, wherein:
the data identifies a transfer of the material; and
the update to the blockchain identifies the transfer of the material.

4. The method of Claim 3, wherein:
the data, comprises contents of a document associated with the transfer of the material; and
the update to the blockchain includes the contents of the document or a hash of the contents of the document.

5. The method of Claim 1, wherein:
the data comprises data associated with (i) the material that is transferred during the material transfer and (ii) multiple pieces of equipment associated with the material transfer;
multiple updates to the blockchain are generated based on the data;
the local copy of the blockchain is updated using the multiple updates; and the multiple updates are published to the one or more nodes.

6. An apparatus for using blockchains for metrology in an industrial control and automation system, comprising:
at least one memory (604, 610, 612) configured to store measurement_data obtained from a level gauging instrument associated with at least one of: (i) material that is transferred during a material transfer involving multiple parties and (ii) the level gauging instrument_associated with the material transfer; and
at least one processor (602) configured to:
execute a transaction node to receive the measurement data;
submit the measurement data to one or more mining nodes for inclusion in one or more suitable blockchains;generate an update to a blockchain (100, 420) based on the measurement data, including identifying one or more sealing actions associated with one or more seals that are issued when the level gauging instrument is verified to provide the measurement data with acceptable accuracy applied to the level gauging instrument or to components of the level gauging instrument, including information about when the seals were applied or information about events that broke the seals, wherein the processor executes the mining node to generate one or more blocks to be added to one or more blockchains;
update a local copy of the blockchain using the update; and
publish the update to one or more nodes for updating one or more additional copies of the blockchain.

7. The apparatus of Claim 6, wherein;
the data identifies a transfer of the material; and
the update to the blockchain identifies the transfer of the material.

8. The apparatus of Claim 7, wherein:
the data comprises contents of a document associated with the transfer of the material; and
the update to the blockchain includes the contents of the document or a hash of the contents of the document.

9. The apparatus of Claim 6, wherein:
the data comprises data associated with (i) the material that is transferred during the material transfer and (ii) multiple pieces of equipment associated with the material transfer; and
the at least one processor is configured to:
generate multiple updates to the blockchain based on the data;
update the local copy of the blockchain using the multiple updates; and publish the multiple updates to the one or more nodes.

10. A non-transitory computer readable medium containing instructions that when executed cause at least one processor (602) to perform the method of any of Claims 1-5.

## Patentansprüche

1. Verfahren zur Verwendung von Blockketten für Messtechnik in einem industriellen Steuerungs- und Automatisierungssystem, umfassend:
Erhalten (702) von Messdaten über einen Prozessor, die von einem Füllstandsmessinstrument erhalten werden, in Verbindung mit mindestens einem von: (i) Material, das während einer Materialübertragung unter Beteiligung mehrerer Parteien übertragen wird und (ii) dem mit der Materialübertragung verbundenen Füllstandsmessinstrument, wobei der Prozessor dazu konfiguriert ist,
einen Transaktionsknoten auszuführen, um die Messdaten zu empfangen;
die Messdaten an einen oder mehrere Mining-Knoten für die Aufnahme in eine oder mehrere geeignete Blockketten zu übermitteln; Erzeugen (704) einer Aktualisierung für eine Blockkette (100, 420) auf der Grundlage der Messdaten, einschließlich der Identifizierung einer oder mehrerer Versiegelungsmaßnahmen in Verbindung mit einem oder mehreren Siegeln, die ausgegeben werden, wenn das Füllstandsmessinstrument verifiziert wird, um für die Messdaten eine akzeptable Genauigkeit, die auf das Füllstandsmessinstrument oder auf Komponenten des Füllstandsmessinstrument angewendet wird, bereitzustellen, einschließlich Informationen darüber, wann die Siegel angebracht wurden, oder Informationen über Ereignisse, die zu einem Bruch der Siegel geführt haben, wobei der Prozessor den Mining-Knoten ausführt, um einen oder mehrere Blöcke zu erzeugen, die zu der einen oder den mehreren Blockketten hinzugefügt werden sollen;
Aktualisieren (706) einer lokalen Kopie der Blockkette unter Verwendung der Aktualisierung; und
Veröffentlichen (708) der Aktualisierung gegenüber einem oder mehreren Knoten, um eine oder mehrere zusätzliche Kopien der Blockkette zu aktualisieren.

2. Verfahren gemäß Anspruch 1, wobei das Veröffentlichen der Aktualisierung das Veröffentlichen der Aktualisierung gegenüber mehreren Parteien eines Konsortiums, einschließlich einer Justizbehörde, umfasst.

3. Verfahren gemäß Anspruch 1, wobei:
die Daten eine Übertragung des Materials identifizieren; und
die Aktualisierung für die Blockkette die Übertragung des Materials identifiziert.

4. Verfahren gemäß Anspruch 3, wobei:
die Daten den Inhalt eines Dokuments in Verbindung mit der Übertragung des Materials umfassen; und
die Aktualisierung für die Blockkette den Inhalt des Dokuments oder ein Verweisziel des Inhalts des Dokuments beinhaltet.

5. Verfahren gemäß Anspruch 1, wobei:
die Daten Daten in Verbindung mit (i) dem Material, das während der Materialübertragung übertragen wird, und (ii) mehreren Geräten in Verbindung mit der Materialübertragung umfassen.
mehrere Aktualisierungen für die Blockkette auf der Grundlage der Daten erzeugt werden;
die lokale Kopie der Blockkette unter Verwendung der mehreren Aktualisierungen aktualisiert wird; und die mehreren Aktualisierungen gegenüber dem einen oder den mehreren Knoten veröffentlicht werden.

6. Vorrichtung zur Verwendung von Blockketten für Messtechnik in einem industriellen Steuerungs- und Automatisierungssystem, umfassend:
mindestens einen Speicher (604, 610, 612), der dazu konfiguriert ist, Messdaten, die von einem Füllstandsmessinstrument in Verbindung mit mindestens einem von: (i) Material, das während einer Materialübertragung unter Beteiligung mehrerer Parteien übertragen wird, und (ii) dem mit der Materialübertragung verbundenen Füllstandsmessinstrument erhalten werden, zu speichern; und
mindestens einen Prozessor (602), der dazu konfiguriert ist:
einen Transaktionsknoten auszuführen, um die Messdaten zu empfangen;
die Messdaten an einen oder mehrere Mining-Knoten für die Aufnahme in eine oder mehrere geeignete Blockketten zu übermitteln; Erzeugen (704) einer Aktualisierung für eine Blockkette (100, 420) auf der Grundlage der Messdaten, einschließlich der Identifizierung einer oder mehrerer Versiegelungsmaßnahmen in Verbindung mit einem oder mehreren Siegeln, die ausgegeben werden, wenn das Füllstandsmessinstrument verifiziert wird, um für die Messdaten eine akzeptable Genauigkeit, die auf das Füllstandsmessinstrument oder auf Komponenten des Füllstandsmessinstrument angewendet wird, bereitzustellen, einschließlich Informationen darüber, wann die Siegel angebracht wurden, oder Informationen über Ereignisse, die zu einem Bruch der Siegel geführt haben, wobei der Prozessor den Mining-Knoten ausführt, um einen oder mehrere Blöcke zu erzeugen, die zu der einen oder den mehreren Blockketten hinzugefügt werden sollen;
eine lokale Kopie der Blockkette unter Verwendung der Aktualisierung zu aktualisieren; und
die Aktualisierung gegenüber einen oder mehrere Knoten zu veröffentlichen, um eine oder mehrere zusätzliche Kopien der Blockkette zu aktualisieren.

7. Vorrichtung gemäß Anspruch 6, wobei:
die Daten eine Übertragung des Materials identifizieren; und
die Aktualisierung für die Blockkette die Übertragung des Materials identifiziert.

8. Vorrichtung gemäß Anspruch 7, wobei:
die Daten den Inhalt eines Dokuments in Verbindung mit der Übertragung des Materials umfassen; und
die Aktualisierung für die Blockkette den Inhalt des Dokuments oder ein Verweisziel des Inhalts des Dokuments beinhaltet.

9. Vorrichtung gemäß Anspruch 6, wobei:
die Daten Daten in Verbindung mit (i) dem Material, das während der Materialübertragung übertragen wird, und (ii) mehreren Geräten in Verbindung mit der Materialübertragung umfassen.
der mindestens eine Prozessor dazu konfiguriert ist:
mehrere Aktualisierungen für die Blockkette auf der Grundlage der Daten zu erzeugen;
die lokale Kopie der Blockkette unter Verwendung der mehreren Aktualisierungen zu aktualisieren; und die mehreren Aktualisierungen gegenüber dem einen oder den mehreren Knoten zu veröffentlichen.

10. Nicht-transitorisches computerlesbares Medium, das Anweisungen enthält, die bei ihrer Ausführung den mindestens einen Prozessor (602) veranlassen, das Verfahren gemäß einem der Ansprüche 1-5 durchzuführen.

## Revendications

1. Procédé d'utilisation de chaînes de blocs pour la métrologie dans un système de commande et d'automatisation industriel, comprenant :
l'obtention (702) par un processeur, de données de mesure obtenues à partir d'un instrument de jaugeage de niveau associées à au moins l'un parmi : (i) une matière qui est transférée lors d'un transfert de matière impliquant de multiples parties et (ii) l'instrument de jaugeage de niveau associé au transfert de matière, dans lequel le processeur est configuré pour :
exécuter un noeud de transaction pour recevoir les données de mesure ;
soumettre les données de mesure à un ou plusieurs noeuds d'exploration pour inclusion dans une ou plusieurs chaînes de blocs appropriées ; la génération (704) d'une mise à jour d'une chaîne de blocs (100, 420) sur la base des données de mesure, incluant l'identification d'une ou plusieurs actions de scellage associées à un ou plusieurs sceaux qui sont délivrés lorsque l'instrument de jaugeage de niveau est vérifié pour fournir les données de mesure avec une précision acceptable appliqués à l'instrument de jaugeage de niveau ou aux composants de l'instrument de jaugeage de niveau, y compris des informations sur le moment où les sceaux ont été appliqués ou des informations sur les événements qui ont brisé les sceaux, dans lequel le processeur exécute le noeud d'exploration pour générer un ou plusieurs blocs à ajouter à une ou plusieurs chaînes de blocs ;
la mise à jour (706) d'une copie locale de la chaîne de blocs à l'aide de la mise à jour ; et
la publication (708) de la mise à jour vers un ou plusieurs noeuds pour mettre à jour une ou plusieurs copies supplémentaires de la chaîne de blocs.

2. Procédé selon la revendication 1, dans lequel la publication de la mise à jour comprend la publication de la mise à jour à de multiples parties d'un consortium, y compris une autorité légale.

3. Procédé selon la revendication 1, dans lequel :
les données identifient un transfert de la matière ; et
la mise à jour de la chaîne de blocs identifie le transfert de la matière.

4. Procédé selon la revendication 3, dans lequel :
les données comprennent le contenu d'un document associé au transfert de la matière ; et
la mise à jour de la chaîne de blocs inclut le contenu du document ou un hachage du contenu du document.

5. Procédé selon la revendication 1, dans lequel :
les données comprennent des données associées à (i) la matière qui est transférée pendant le transfert de matière et (ii) de multiples pièces d'équipement associées au transfert de matière ;
de multiples mises à jour de la chaîne de blocs sont générées sur la base des données ;
la copie locale de la chaîne de blocs est mise à jour à l'aide des multiples mises à jour ; et les multiples mises à jour sont publiées sur les un ou plusieurs noeuds.

6. Appareil pour l'utilisation de blocs de chaîne pour la métrologie dans un système de commande et d'automatisation industriel, comprenant :
au moins une mémoire (604, 610, 612) configurée pour stocker des données de mesure obtenues à partir d'un instrument de jaugeage de niveau associées à au moins l'un parmi : (i) une matière qui est transférée lors d'un transfert de matière impliquant de multiples parties et (ii) l'instrument de jaugeage de niveau associé au transfert de matière ; et
au moins un processeur (602) configuré pour :
exécuter un noeud de transaction pour recevoir les données de mesure ;
soumettre les données de mesure à un ou plusieurs noeuds d'exploration pour inclusion dans une ou plusieurs chaînes de blocs appropriées ; générer une mise à jour d'une chaîne de blocs (100, 420) sur la base des données de mesure, incluant l'identification d'une ou plusieurs actions de scellage associées à un ou plusieurs sceaux qui sont délivrés lorsque l'instrument de jaugeage de niveau est vérifié pour fournir les données de mesure avec une précision acceptable appliqués à l'instrument de jaugeage de niveau ou aux composants de l'instrument de jaugeage de niveau, y compris des informations sur le moment où les sceaux ont été appliqués ou des informations sur les événements qui ont brisé les sceaux, dans lequel le processeur exécute le noeud d'exploration pour générer un ou plusieurs blocs à ajouter à une ou plusieurs chaînes de blocs ;
mettre à jour une copie locale de la chaîne de blocs à l'aide de la mise à jour ; et
publier la mise à jour vers un ou plusieurs noeuds pour mettre à jour une ou plusieurs copies supplémentaires de la chaîne de blocs.

7. Appareil selon la revendication 6, dans lequel ;
les données identifient un transfert de la matière ; et
la mise à jour de la chaîne de blocs identifie le transfert de la matière.

8. Appareil selon la revendication 7, dans lequel :
les données comprennent le contenu d'un document associé au transfert de la matière ; et
la mise à jour de la chaîne de blocs inclut le contenu du document ou un hachage du contenu du document.

9. Appareil selon la revendication 6, dans lequel :
les données comprennent des données associées à (i) la matière qui est transférée pendant le transfert de matière et (ii) de multiples pièces d'équipement associées au transfert de matière ; et
le au moins un processeur est configuré pour :
générer de multiples mises à jour de la chaîne de blocs sur la base des données ;
mettre à jour la copie locale de la chaîne de blocs à l'aide des multiples mises à jour ; et publier les multiples mises à jour vers les un ou plusieurs noeuds.

10. Support non transitoire lisible par ordinateur contenant des instructions qui lorsqu'elles sont exécutées amènent au moins un processeur (602) à réaliser le procédé selon l'une quelconque des revendications 1 à 5.
